# EUROPEAN PATENT APPLICATION

(11) **EP 4 503 216 A1**
(43) Date of publication of application: **05.02.2025**
(21) Application number: 23779263.5
(22) Date of filing: 06.03.2023
(51) Int. Cl.: H01M 10/04, H01M 4/48, H01M 10/0566, H01M 10/0587, H01M 50/107, H01M 50/434, H01M 50/446, H01M 50/451, H01M 50/46, H01M 50/463

(54) **CYLINDRICAL SECONDARY BATTERY**

(30) Priority: 31.03.2022 JP 2022057909
(71) Applicant: Panasonic Intellectual Property Management Co., Ltd., Osaka-shi, Osaka 540-6207 (JP)
(72) Inventor: ISHIBASHI, Tatsuya, Kadoma-shi, Osaka 571-0057 (JP); OGAWA, Yuko, Kadoma-shi, Osaka 571-0057 (JP); NISHINO, Hajime, Kadoma-shi, Osaka 571-0057 (JP)
(74) Representative: Eisenführ Speiser
(86) International application number: PCT/JP2023/008268
(87) International publication number: WO 2023/189234

(57) **Abstract**

A cylindrical secondary battery which is one aspect of the present disclosure comprises an electrode body in which a positive electrode and a negative electrode are wound with a separator interposed therebetween, an electrolytic solution, and a cylindrical outer casing accommodating the electrode body and the electrolytic solution, wherein: an insulator is disposed between the separator and at least one of the positive electrode and the negative electrode; and if the electrode body is divided, in the center in a longitudinal direction of the separator, into a winding inner region on a winding inner side and a winding outer region on a winding outer side, a projected area of the insulator on the separator in the winding inner region is larger than a projected area of the insulator on the separator in the winding outer region.

## Description

### TECHNICAL FIELD

The present disclosure relates to a cylindrical secondary battery.

### BACKGROUND

A cylindrical secondary battery is a battery in which an electrode assembly formed by winding a positive electrode and a negative electrode with a separator interposed therebetween is accommodated in a cylindrical outer housing body. Patent Literature 1 and Patent Literature 2 disclose a separator in which irregularities are provided in the surface of the separator for the purpose of easily injecting an electrolytic solution into an outer housing body when a battery is manufactured.

### CITATION LIST

### PATENT LITERATURE

Patent Literature 1: JP 4529903 B
Patent Literature 2: JP 2008-226696 A

### SUMMARY

In recent years, for the purpose of increasing the capacity of a cylindrical secondary battery, an increase in size of the cylindrical secondary battery has been studied. As a result of intensive studies by the present inventors, non-uniformity of distribution of an electrolytic solution occurs in a winding-type electrode assembly, and thus a battery capacity may be reduced due to repeated charging and discharging. It has been found that this tendency is remarkable in a large cylindrical secondary battery. The techniques described in Patent Literature 1 and Patent Literature 2 have not studied the increase in the size of the battery, and there is still room for improvement.

An object of the present disclosure is to provide a cylindrical secondary battery having a high capacity and excellent charge-discharge cycle characteristics.

A cylindrical secondary battery which is one aspect of the present disclosure comprises: an electrode assembly in which a positive electrode and a negative electrode are wound with a separator therebetween; an electrolytic solution; and a cylindrical outer housing body that accommodates the electrode assembly and the electrolytic solution, wherein an insulator is disposed between the separator and at least one of the positive electrode and the negative electrode, and if the separator is divided, at a center in a longitudinal direction of the separator, into an inner winding region on an inner side of winding and an outer winding region on an outer side of winding, a projected area of the insulator on the separator in the inner winding region is larger than a projected area of the insulator on the separator in the outer winding region.

The cylindrical secondary battery according to the present disclosure can have an improved battery capacity and charge-discharge cycle characteristics.

### BRIEF DESCRIPTION OF DRAWINGS

FIG. 1 is an axial cross-sectional view of a cylindrical secondary battery as an example embodiment.
FIG. 2 is a perspective view of a winding-type electrode assembly included in the secondary battery shown in FIG. 1.
FIG. 3 is a front view showing a separator constituting an electrode assembly according to an example embodiment in a developed state, and is a view in which an insulator is projected.
FIG. 4 is a plan view of an upper surface of the electrode assembly including the separator shown in FIG. 3, and is a view showing positions where the insulators are disposed.

### DESCRIPTION OF EMBODIMENTS

In recent years, an increase in the size of a cylindrical secondary battery has been studied for the purpose of improving a battery capacity. However, in a large-sized battery, as compared with a conventional battery, an electrolytic solution is apt to be insufficient on the winding center side of an electrode assembly, and charge-discharge cycle characteristics are easily deteriorated. In order to solve this problem, the present inventors have extensively conducted studies, and have found that when an insulator is disposed at a predetermined position between at least one of a positive electrode and a negative electrode, and a separator, charge-discharge cycle characteristics can be improved while a decrease in the battery capacity is suppressed. That is, if the separator is divided into an inner winding region on the inner side of winding and an outer winding region on the outer side of winding at the center in the longitudinal direction of the separator, the insulator is disposed in the inner winding region where an electrolytic solution is likely to be insufficient, and the projected area of the insulator on the separator in the outer winding region where the electrolytic solution is abundant is reduced as compared with the inner winding region, so that both the battery capacity and the charge-discharge cycle characteristics can be achieved.

Hereinafter, an example embodiment of a cylindrical secondary battery according to the present disclosure will be described in detail with reference to the drawings. In the following description, specific shapes, materials, numerical values, and directions and the like are given as examples for facilitating understanding of the present invention, and can be appropriately changed in accordance with the specifications of the cylindrical secondary battery. When the following description refers to a plurality of embodiments or variants, it is envisioned from the beginning that characteristic features thereof may be appropriately used in combination.

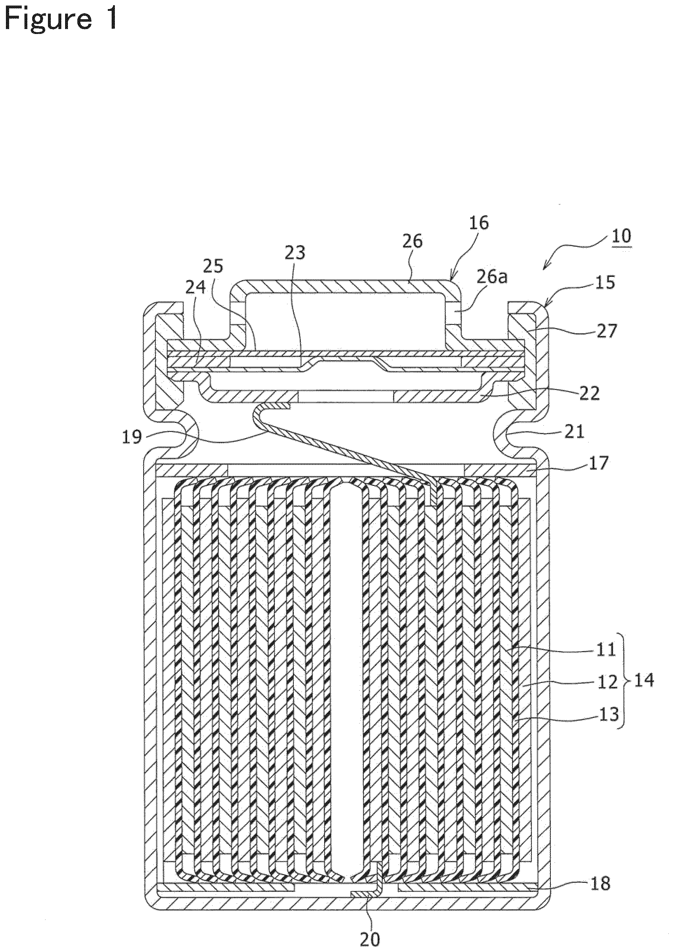

FIG. 1 is an axial cross-sectional view of a cylindrical secondary battery 10 as an example embodiment. In the secondary battery 10 shown in FIG. 1, an electrode assembly 14 and an electrolytic solution (not shown) are accommodated in a cylindrical outer housing body 15. The electrode assembly 14 has a winding-type structure formed by winding a positive electrode 11 and a negative electrode 12 with a separator 13 interposed. As a non-aqueous solvent (organic solvent) of the electrolytic solution, it is possible to use carbonates, lactones, ethers, ketones, and esters and the like, and these solvents can be used by mixing two or more types thereof. When two or more types of solvents are used in combination, it is preferable to use a mixed solvent containing a cyclic carbonate and a chain carbonate. For example, ethylene carbonate (EC), propylene carbonate (PC), and butylene carbonate (BC) and the like can be used as the cyclic carbonate, and dimethyl carbonate (DMC), ethyl methyl carbonate (EMC), and diethyl carbonate (DEC) and the like can be used as the chain carbonate. As an electrolyte salt of the electrolytic solution, it is possible to use LiPF₆, LiBF₄, and LiCF₃SO₃ and the like, as well as mixtures thereof. The amount of the electrolyte salt dissolved in the non-aqueous solvent can be, for example, greater than or equal to 0.5 mol/L and less than or equal to 2.0 mol/L. Hereinafter, for convenience of description, a side toward a sealing assembly 16 will be described as "upper", and a side toward the bottom portion of the outer housing body 15 will be described as "lower".

The opening end portion of the outer housing body 15 is closed with the sealing assembly 16, and the inside of the secondary battery 10 is thereby hermetically sealed. Above and below the electrode assembly 14, insulating plates 17 and 18 are provided respectively. A positive electrode lead 19 extends upward through a through hole in the insulating plate 17, and is welded to the lower surface of a filter 22, which is the bottom plate of the sealing assembly 16. In the secondary battery 10, a cap 26, which is the top plate of the sealing assembly 16 electrically connected to the filter 22, serves as a positive electrode terminal. Meanwhile, a negative electrode lead 20 extends toward the bottom portion of the outer housing body 15 through a through hole in the insulating plate 18, and is welded to the inner surface of the bottom portion of the outer housing body 15. In the secondary battery 10, the outer housing body 15 serves as a negative electrode terminal. When the negative electrode lead 20 is provided at an outer winding end portion, the negative electrode lead 20 extends on the outside of the insulating plate 18 and toward the bottom portion of the outer housing body 15, and is welded to the inner surface of the bottom portion of the outer housing body 15.

The outer housing body 15 is, for example, a bottomed cylindrical metal outer can. A gasket 27 is provided between the outer housing body 15 and the sealing assembly 16 to ensure sealability inside the secondary battery 10. The outer housing body 15 has a groove portion 21 which is formed by, for example, pressing a side surface portion from the outside, and which supports the sealing assembly 16. The groove portion 21 is preferably formed in an annular shape along the circumferential direction of the outer housing body 15, and supports the sealing assembly 16 on its upper surface.

The sealing assembly 16 includes the filter 22, a lower vent member 23, an insulating member 24, an upper vent member 25, and the cap 26, which are laminated in this order from the electrode assembly 14 side. Each of the members constituting the sealing assembly 16 has, for example, a disk shape or a ring shape, and the respective members except the insulating member 24 are electrically connected to each other. The lower vent member 23 and the upper vent member 25 are connected to each other at their central portions, and the insulating member 24 is interposed between the circumferential portions of these vent members. When the internal pressure of the battery increases due to abnormal heat generation, for example, the lower vent member 23 ruptures, which causes the upper vent member 25 to swell toward the cap 26 and move away from the lower vent member 23, and the electrical connection between the two vent members is thereby cut off. When the internal pressure further increases, the upper vent member 25 ruptures, and gas is discharged from an opening 26a of the cap 26.

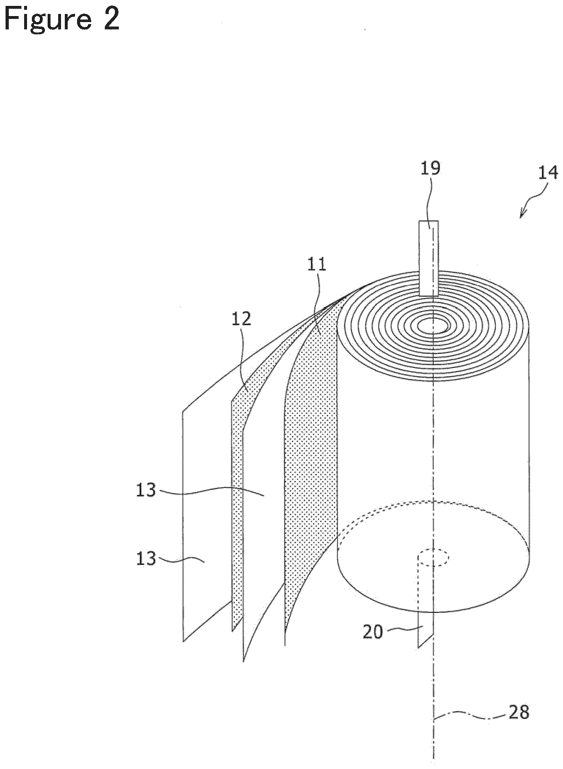

Next, the electrode assembly 14 will be described with reference to FIGS. 2 to 4. The diameter of the electrode assembly 14 is preferably greater than or equal to 20 mm. As a result, the battery capacity of the secondary battery 10 can be increased.

FIG. 2 is a perspective view of the electrode assembly 14. As described above, the electrode assembly 14 has a wound structure in which the positive electrode 11 and the negative electrode 12 are spirally wound with the separator 13 interposed therebetween. The positive electrode 11, the negative electrode 12, and the separator 13 are all formed in a strip shape, and are spirally wound around a winding core disposed along a winding axis 28 so as to be placed in a state of being alternately stacked in the radial direction of the electrode assembly 14. In the electrode assembly 14, the longitudinal direction of the positive electrode 11 and the negative electrode 12 is the winding direction, and the short direction of the positive electrode 11 and the negative electrode 12 is the axial direction. At the upper end of the electrode assembly 14, the positive electrode lead 19 extends axially from a position located substantially at the midpoint in the radial direction between the center and the outermost periphery. At the lower end of the electrode assembly 14, the negative electrode lead 20 extends axially from a position near the winding axis 28.

The positive electrode 11 includes a strip-shaped positive electrode current collector and a positive electrode mixture layer formed on the surface of the positive electrode current collector. The positive electrode mixture layer is preferably formed on both surfaces of the positive electrode current collector. As the positive electrode current collector, a foil of a metal, such as aluminum or an aluminum alloy, that is stable in a potential range of the positive electrode 11, or a film in which the metal is disposed on its surface layer, or the like can be used.

The positive electrode mixture layer may contain a positive electrode active material, a conductive agent, and a binder and the like. The positive electrode mixture layer can be produced, for example, by applying a positive electrode mixture slurry containing the positive electrode active material, the conductive agent, the binder, and a solvent such as N-methyl-2-pyrrolidone (NMP) onto both surfaces of the positive electrode current collector, drying the applied slurry, and then rolling the product.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{Z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). These may be used singly, or a plurality of kinds of them may be mixed and used. From the viewpoint that the high capacity of the secondary battery 10 can be achieved, it is preferable that the positive electrode active material contains a lithium nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3).

Examples of the conductive agent contained in the positive electrode mixture layer include carbon-based particles such as carbon black (CB), acetylene black (AB), Ketjenblack, carbon nanotubes (CNTs), graphene, and graphite. These may be used singly or in combination of two or more kinds thereof.

Examples of the binder contained in the positive electrode mixture layer include fluorine-based resins such as polytetrafluoroethylene (PTFE) and polyvinylidene fluoride (PVDF), polyimide-based resins, acrylic resins, polyolefin-based resins, and polyacrylonitrile (PAN). These may be used singly or in combination of two or more kinds thereof.

The negative electrode 12 includes a strip-shaped negative electrode current collector and a negative electrode mixture layer formed on the surface of the negative electrode current collector. The negative electrode mixture layer is preferably formed on both surfaces of the negative electrode current collector. As the negative electrode current collector, a foil of a metal, such as copper or a copper alloy, that is stable in a potential range of the negative electrode 12, a film in which the metal is disposed on its surface layer, or the like can be used.

The negative electrode mixture layer may contain a negative active material and a binder and the like. The negative electrode mixture layer can be produced, for example, by applying a negative electrode mixture slurry containing a negative electrode active material, a binder, and a solvent such as water onto both surfaces of the negative electrode current collector, drying the applied slurry, and then rolling the product.

The negative electrode active material contained in the negative electrode mixture layer is not particularly limited as long as it can reversibly occlude and discharge lithium ions. and a carbon material such as graphite is generally used. As the graphite, natural graphites such as scale-like graphite, massive graphite, and earthy graphite, and artificial graphites such as massive artificial graphite and graphitized mesophase carbon microbeads may be used.

The negative electrode active material preferably contains a silicon-containing material. As a result, the battery capacity of the secondary battery 10 can be increased. The negative electrode 12 containing the silicon-containing material has a large volume change due to charging and discharging of the battery, and thus the electrolytic solution is likely to be insufficient on the winding center side of the electrode assembly 14, but the charge-discharge cycle characteristics can be improved by the effect of the present disclosure. Examples of the silicon-containing material include a silicon-containing compound represented by SiO_{X} (0.5 ≤ x ≤ 1.6), a silicon-containing compound in which Si fine particles are dispersed in a lithium silicate phase represented by Li_{2y}SiO_{(2+y)} (0 < y < 2), and a silicon-containing compound in which Si fine particles are dispersed in a carbon phase.

Examples of the binder contained in the negative electrode mixture layer include styrene butadiene rubber (SBR), nitrile-butadiene rubber (NBR), carboxymethyl cellulose (CMC) or a salt thereof, polyacrylic acid (PAA) or a salt thereof, and polyvinyl alcohol (PVA). These may be used singly or in combination of two or more kinds thereof.

For example, a porous sheet having an ion permeation property and an insulation property is used for the separator 13. Specific examples of the porous sheet include fine porous thin films, woven fabrics, and nonwoven fabrics. As the material of the separator 13, olefin-based resins such as polyethylene and polypropylene, cellulose, and the like are preferable. The separator 13 may be a laminate including a cellulose fiber layer and a thermoplastic resin fiber layer such as an olefin-based resin fiber layer, or may be a multilayer separator including a polyethylene layer and a polypropylene layer.

The separator 13 may include a heat resistant layer on at least one surface. In other words, the separator 13 may include a heat resistant layer on at least one of a surface facing the positive electrode 11 and a surface facing the negative electrode 12. The heat resistant layer is preferably provided at least on a surface facing the positive electrode 11. The heat resistant layer is provided on the entire surface of the separator 13, for example.

The heat resistant layer contains, for example, a filler and a binder. Examples of the filler include metal oxide particles made of aluminum oxide and the like, metal nitride particles, metal fluoride particles, metal carbide particles, and sulfide particles. These may be used singly or in combination of two or more kinds thereof. Examples of the binder include fluorine-based resins such as polyvinylidene fluoride (PVDF) and polytetrafluoroethylene (PTFE), polyimide-based resins, polyamide-based resins, acrylic resins, polyolefin-based resins, styrene-butadiene rubber (SBR), nitrile-butadiene rubber (NBR), carboxymethyl cellulose (CMC) or a salt thereof, polyacrylic acid (PAA) or a salt thereof, and polyvinyl alcohol (PVA). These may be used singly or in combination of two or more kinds thereof.

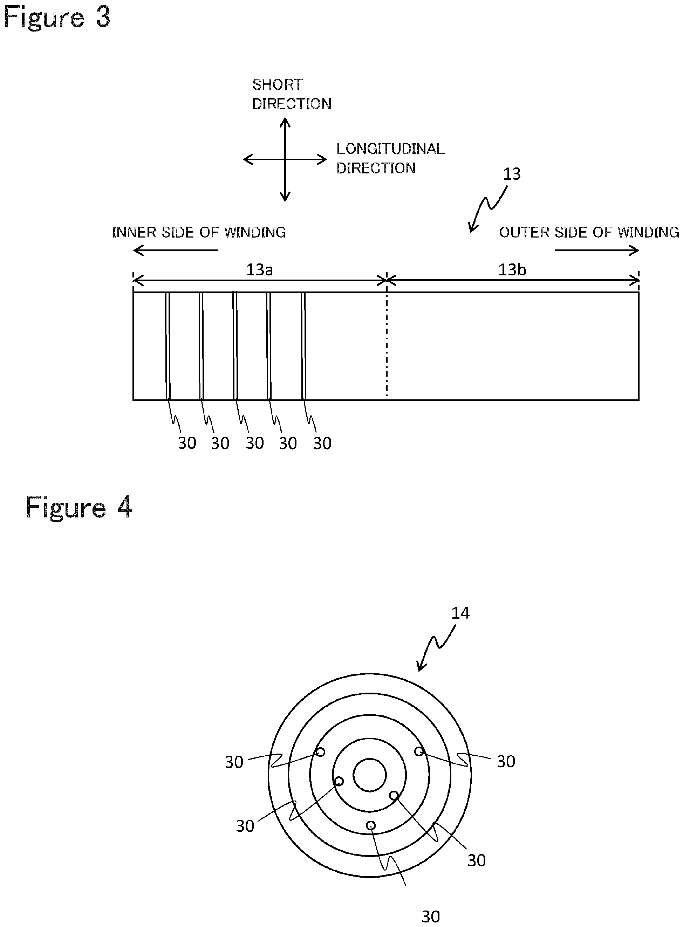

In the electrode assembly 14, an insulator 30 is disposed between at least one of the positive electrode 11 and the negative electrode 12 and the separator 13. As a result, the electrolytic solution easily permeates the separator 13, so that charge-discharge cycle characteristics are improved. FIG. 3 is a front view showing a separator 13 constituting an electrode assembly 14 according to an example embodiment in a developed state, and is a view in which an insulator is projected. In the present embodiment, the insulator 30 has a linear shape extending in the short direction of the separator 13. In other words, the linear insulators 30 are disposed substantially parallel to the short direction of the separator 13, and the length of the insulator 30 is substantially the same as the length of the separator 13 in the short direction.

If the separator 13 is divided into an inner winding region 13a on the inner side of winding and an outer winding region 13b on the outer side of winding at the center of the separator 13 in the longitudinal direction, the projected area of the insulator 30 on the separator 13 in the inner winding region 13a is larger than the projected area of the insulator 30 on the separator 13 in the outer winding region 13b. As a result, it is possible to suppress the shortage of the electrolytic solution on the inner winding center side while reducing the volume of the insulator 30 as much as possible, and thus, it is possible to achieve both the battery capacity and the charge-discharge cycle characteristics. By disposing the insulator 30, the volumes of the positive electrode 11 and the negative electrode 12 that can be accommodated in the outer housing body 15 are reduced, so that the battery capacity is reduced. However, by disposing more insulators 30 in the inner winding region 13a than in the outer winding region 13b, it is possible to achieve both the battery capacity and the charge-discharge cycle characteristics. The projected area of the insulator 30 on the separator 13 in the inner winding region 13a is preferably greater than or equal to 0.1% and less than or equal to 50%, more preferably greater than or equal to 0.1% and less than or equal to 20%, still more preferably greater than or equal to 0.1% and less than or equal to 10%, and particularly preferably greater than or equal to 0.1% and less than or equal to 5% with respect to the area of the inner winding region 13a.

In the present embodiment shown in FIG. 3, the five insulators 30 having the same width are disposed at equal intervals only in the inner winding region 13a, and the insulator 30 is not disposed in the outer winding region 13b. FIG. 4 is a plan view of an upper surface of the electrode assembly 14 including the separator 13 shown in FIG. 3, and is a view showing positions where the insulators 30 are disposed. As shown in FIG. 4, the insulators 30 are disposed on the winding center side. Note that the form of the insulators 30 to be disposed is not limited to this example. The number of the insulators 30 is not particularly limited. The widths of the insulators 30 may be different from each other, and the intervals between the insulators 30 may be different from each other. The insulators 30 may be disposed in the outer winding region 13b.

The width of the linear insulator 30 is, for example, less than or equal to 1 mm. The lower limit value of the width of the linear insulator 30 is, for example, 0.01 mm. The height of the linear insulator 30 is, for example, greater than or equal to 0.5µm and less than or equal to 1 mm. The cross-sectional shape of the linear insulator 30 is not particularly limited, and is, for example, a circular shape or a rectangular shape.

The shape of the insulator 30 is not limited to the example of FIG. 3, and the insulator 30 may have a dot shape. The outer diameter of the dot-shaped insulator 30 is, for example, less than or equal to 1 mm . The lower limit value of the outer diameter of the dot-shaped insulator 30 is, for example, 0.01 mm. The height of the dot-shaped insulator 30 is, for example, greater than or equal to 0.5µm and less than or equal to 1 mm . The shape of the dot-shaped insulator 30 is not particularly limited, and is, for example, a circular shape or a rectangular shape in a front view.

The material of the insulator 30 is not particularly limited as long as it has an insulating property, and is, for example, a ceramic or a resin. The material of the insulator 30 is preferably a resin. Examples of the resin used for the insulator 30 include fluorine-based resins such as polyethylene terephthalate (PET), polyimide (PI), polypropylene (PP), polybutylene terephthalate (PBT), and polytetrafluoroethylene (PTFE), and acrylic resins such as polyacrylic acid, polymethacrylic acid, polyacrylate, and polymethacrylate. These may be used singly or in combination of two or more kinds thereof. As the linear insulator 30, for example, PET fibers can be used. The dot-shaped insulator 30 can be formed, for example, on the surface of the positive electrode 11, the negative electrode 12, or the separator 13 by dissolving the resin in a solvent and using an inkjet method or the like.

### EXAMPLES

Hereinafter, the present disclosure will be further described with reference to Examples. However, the present disclosure is not limited to these Examples.

### [Production of Positive Electrode]

95 parts by mass of LiNi_{0.8}Co_{0.15}Al_{0.05}O₂, 2.5 parts by mass of acetylene black (AB), and 2.5 parts by mass of polyvinylidene fluoride (PVDF) having an average molecular weight of 1.1 million were mixed, and an appropriate amount of N-methyl-2-pyrrolidone (NMP) was added thereto to prepare a positive electrode mixture slurry. Next, the positive electrode mixture slurry was applied to both surfaces of a strip-shaped positive electrode current collector made of an aluminum foil, and dried. The product was then rolled and cut into a predetermined electrode plate size to produce a positive electrode including positive electrode mixture layers formed on both surfaces of the positive electrode current collector. At a substantially central part in the longitudinal direction of a positive electrode, there was provided a positive electrode exposed portion where the mixture layer was absent and a surface of the current collector was exposed, and an aluminum positive electrode lead was welded to the positive electrode exposed portion.

### [Production of Negative Electrode]

94 parts by mass of graphite, 6 parts by mass of SiO, 1 part by mass of carboxymethyl cellulose (CMC), and 1 part by mass of styrene-butadiene rubber (SBR) were mixed, and an appropriate amount of water was added thereto to prepare a negative electrode mixture slurry. Next, the negative electrode mixture slurry was applied to both surfaces of a strip-shaped negative electrode current collector made of a copper foil, and dried. The product was then rolled and cut into a predetermined electrode plate size to produce a negative electrode in which negative electrode mixture layers were formed on both surfaces of the negative electrode current collector. At the inner winding end portion, there was provided a negative electrode exposed portion where the mixture layer was absent and a surface of the current collector was exposed, and a nickel negative electrode lead was welded to the negative electrode exposed portion.

### [Preparation of Electrolytic Solution]

5 parts by mass of vinylene carbonate (VC) was added to 100 parts by mass of a mixed solvent (EC:DMC=1:3 by volume) containing ethylene carbonate (EC) and dimethyl carbonate (DMC). LiPF₆ was dissolved in the mixed solvent so as to have a concentration of 1 mol/L to prepare an electrolytic solution.

### [Production of Secondary Battery]

On the surface of the positive electrode, 10 PET fibers each having a diameter of 0.1 mm were disposed so as to be evenly arranged over the entire region corresponding to the inner winding region of the separator, and one PET fiber each having a diameter of 0.1 mm was disposed at the center of the region corresponding to the outer winding region of the separator. The projected area of one PET fiber on the separator was 0.05% with respect to the area of the inner winding region (or the outer winding region). Thereafter, the positive electrode and the negative electrode were wound with a separator made of polyethylene interposed therebetween to produce an electrode assembly. Insulating plates were disposed above and below the electrode assembly, and the electrode assembly was accommodated in a cylindrical outer housing body. Next, a negative electrode lead was welded to the bottom portion of the outer housing body, and a positive electrode lead was welded to a sealing assembly. Thereafter, an electrolytic solution was injected into the outer housing body by a decompression method, and then an opening end portion of the outer housing body was sealed by caulking to the sealing assembly with a gasket interposed therebetween, thereby producing a secondary battery.

### <Example 2>

A secondary battery was produced in the same manner as in Example 1 except that in the production of the secondary battery, the arrangement of the PET fibers was changed so as to leave only two fibers from the winding center side among the 10 PET fibers disposed on the surface of the positive electrode in Example 1, and the positive electrode and the negative electrode were elongated so that the diameter of an electrode assembly was the same as the diameter of the electrode assembly of Example 1.

### <Example 3>

A secondary battery was produced in the same manner as in Example 1 except that in the production of the secondary battery, the number of PET fibers disposed in a portion corresponding to the inner winding region of a separator on the surface of a positive electrode was changed to 20 so that the interval between the PET fibers was half as compared with Example 1, and the positive electrode and a negative electrode were shortened so that the diameter of an electrode assembly was the same as the diameter of the electrode assembly of Example 1.

### <Example 4>

A secondary battery was produced in the same manner as in Example 1 except that in the production of the secondary battery, a PET fiber was not disposed in a portion corresponding to the inner winding region of a separator on the surface of a positive electrode, and the positive electrode and a negative electrode were shortened so that the diameter of an electrode assembly was the same as the diameter of the electrode assembly of Example 1.

### <Comparative Example 1>

A secondary battery was produced in the same manner as in Example 1 except that in the production of the secondary battery, a PET fiber was not disposed on the surface of a positive electrode, and the positive electrode and a negative electrode were elongated so that the diameter of an electrode assembly was the same as the diameter of the electrode assembly of Example 1.

### <Comparative Example 2>

A secondary battery was produced in the same manner as in Example 1 except that in the production of the secondary battery, 10 PET fibers were uniformly arranged over the entire region corresponding to the outer winding region of a separator on the surface of a positive electrode, and the positive electrode and a negative electrode were shortened so that the diameter of an electrode assembly was the same as the diameter of the electrode assembly of Example 1.

### [Evaluation of Initial Discharge Capacity and Capacity Retention Rate]

The secondary batteries of Examples and Comparative Examples were charged to 4.2 V at a constant current of 1 C at an environmental temperature of 25°C, and then charged at a constant voltage of 4.2 V until a current value reached 0.05 C. After the secondary batteries were left for 20 minutes, the secondary batteries were discharged to 2.5 V at a constant current of 1 C. The charge/discharge was defined as one cycle, and 200 cycles were performed. A capacity retention rate during the charge-discharge cycle of the secondary battery of each of Examples and Comparative Examples was calculated using the following formula. The discharge capacity at the first cycle was defined as an initial discharge capacity. Capacity retention rate = (discharge capacity at 200th cycle/discharge capacity at 1st cycle) × 100

Table 1 shows the evaluation results of the initial discharge capacities and the capacity retention rates of the secondary batteries of Examples and Comparative Examples. The initial discharge capacities of the secondary batteries of Examples 1 to 4 and Comparative Example 2 are relatively expressed with the initial discharge capacity of the secondary battery of Comparative Example 1 as 100. Table 1 also shows the ratio of the projected area of the insulator in the inner winding region and the outer winding region to the area of the inner winding region (or the outer winding region).

**[Table 1]**

| | Ratio of projected area of insulator | | Initial discharging capacity | Capacity retention rate [%] |
|---|---|---|---|---|
| | Inner winding region [%] | Outer winding region [%] | | |
| Example 1 | 0.5 | 0.05 | 96 | 84 |
| Example 2 | 0.1 | 0.05 | 97 | 82 |
| Example 3 | 1.0 | 0.05 | 94 | 83 |
| Example 4 | 0.5 | 0 | 97 | 84 |
| Comparative Example 1 | 0 | 0 | 100 | 41 |
| Comparative Example 2 | 0.5 | 0.5 | 88 | 85 |

In the secondary batteries of Examples, both the initial discharge capacity and the charge-discharge cycle characteristics can be achieved. Meanwhile, the secondary battery of Comparative Example 1 in which no insulators are disposed has poor charge-discharge cycle characteristics, and the secondary battery of Comparative Example 2 in which the same number of insulators as the number of insulators disposed in the inner winding region are disposed in the outer winding region has a poor initial discharge capacity. Therefore, it is found that the battery capacity and the charge-discharge cycle characteristics are improved by disposing the insulator such that the projected area of the insulator on the separator in the inner winding region is larger than the projected area of the insulator on the separator in the outer winding region.

### REFERENCE SIGNS LIST

- 10: secondary battery
- 11: positive electrode, inner winding end portion
- 12: negative electrode
- 13: separator
- 13a: inner winding region
- 13b: outer winding region
- 14: electrode assembly
- 15: outer housing body
- 16: sealing assembly
- 17, 18: insulating plate
- 19: positive electrode lead
- 20: negative electrode lead
- 21: groove portion
- 22: filter
- 23: lower vent member
- 24: insulating member
- 25: upper vent member
- 26: cap
- 26a: opening
- 27: gasket
- 28: winding axis
- 30: insulator

## Claims

1. A cylindrical secondary battery comprising: an electrode assembly in which a positive electrode and a negative electrode are wound with a separator therebetween; an electrolytic solution; and a cylindrical outer housing body that accommodates the electrode assembly and the electrolytic solution,
wherein an insulator is disposed between the separator and at least one of the positive electrode and the negative electrode, and
if the separator is divided, at a center in a longitudinal direction of the separator, into an inner winding region on an inner side of winding and an outer winding region on an outer side of winding, a projected area of the insulator on the separator in the inner winding region is larger than a projected area of the insulator on the separator in the outer winding region.

2. The cylindrical secondary battery according to claim 1, wherein the separator includes a heat resistant layer on at least one of a surface facing the positive electrode and a surface facing the negative electrode.

3. The cylindrical secondary battery according to claim 1 or 2, wherein the insulator has a linear shape extending in a short direction of the separator.

4. The cylindrical secondary battery according to claim 3, wherein the width of the insulator is less than or equal to 1 mm.

5. The cylindrical secondary battery according to claim 1 or 2, wherein the insulator has a dot shape.

6. The cylindrical secondary battery according to claim 5, wherein the outer diameter of the insulator is less than or equal to 1 mm.

7. The cylindrical secondary battery according to any one of claims 1 to 6, wherein the projected area of the insulator on the separator in the inner winding region is greater than or equal to 0.1% and less than or equal to 50% with respect to an area of the inner winding region.

8. The cylindrical secondary battery according to any one of claims 1 to 7, wherein the insulator is not disposed in the outer winding region.

9. The cylindrical secondary battery according to any one of claims 1 to 8, wherein a material of the insulator is a resin.

10. The cylindrical secondary battery according to any one of claims 1 to 9, wherein the negative electrode contains a silicon-containing material as a negative electrode active material.

11. The cylindrical secondary battery according to any one of claims 1 to 10, wherein the diameter of the electrode assembly is greater than or equal to 20 mm.
